# DEMANDE DE BREVET EUROPEEN

(11) **EP 1 719 691 A1**
(43) Date de publication de la demande: **08.11.2006**
(21) Numéro de dépôt: 06290648.2
(22) Date de dépôt: 20.04.2006
(51) Int. Cl.: B62D 25/08, B60R 21/34

(54) **Face avant de véhicule automobile ayant une butée de capot prévue pour absorber les chocs piétons**

(30) Priorité: 03.05.2005 FR 0504512
(71) Demandeur: Faurecia Bloc Avant, 92000 Nanterre (FR)
(72) Inventeur: Laurent, Claude, 25420 Voujeaucourt (FR); Diaw, Baye, 25420 Courcelles les Montbeliard (FR)
(74) Mandataire: Domenego, Bertrand

(57) **Abrégé**

Cette face avant comporte une traverse structurelle, et au moins une butée de capot (3), agencée sur la traverse et prévue pour absorber des chocs correspondant à un impact de piéton sur le capot, ladite butée (3) comprenant :
- un bloc élastomère (9) d'appui du capot,
- un support déformable (11) pour le bloc élastomère (9), solidaire de la traverse, et
- un élément déformable (13) d'absorption de choc, solidaire du bloc élastomère (9) et reliant ce dernier à la traverse.

Le support déformable (11) est venu de matière avec la traverse, et l'élément d'absorption (13) est rapporté et fixé sur la traverse.

## Description

La présente invention concerne une face avant de véhicule automobile comportant une traverse structurelle, et au moins une butée de capot, agencée sur la traverse et prévue pour absorber des chocs correspondant à un impact de piéton sur le capot, ladite butée comprenant :
- un bloc élastomère d'appui du capot,
- un support déformable pour le bloc élastomère, solidaire de la traverse, et
- un élément déformable d'absorption de choc solidaire du bloc élastomère et reliant ce dernier à la traverse.

On connaît de telles faces avant dans l'état de la technique, dans lesquelles la butée de capot est prévue pour fonctionner de la façon suivante : en fonctionnement normal, c'est-à-dire lors de la fermeture (ou claquage) du capot, l'amortissement est assuré par le bloc élastomère ; lors d'un choc piéton, qui s'accompagne d'un effort axial de plus grande intensité, l'amortissement est assuré essentiellement par la déformation de l'élément d'absorption, le support déformable (qui peut être prévu frangible) n'assurant plus de fonction mécanique significative à ce niveau de contrainte.

Les butées utilisées dans de telles faces avant sont généralement conçues de telle sorte que leur montage sur le véhicule nécessite des aménagements particuliers de la traverse et éventuellement du capot.

C'est ainsi que l'intégration de la fonction d'absorption de choc piéton aux butées de capot, selon les techniques connues à ce jour, implique des modifications substantielles des faces avant existantes.

L'invention a pour but de minimiser les aménagements nécessaires à l'intégration de cette fonction dans la conception des faces avant actuelles.

A cet effet, l'invention a pour objet une face avant du type précité, dans laquelle le support déformable est venu de matière avec la traverse, et l'élément d'absorption est rapporté et fixé sur la traverse.

Suivant des caractéristiques optionnelles de l'invention, prises seules ou selon toutes les combinaisons techniquement envisageables :
- la face avant est de type hybride, la traverse ayant une ossature métallique et étant partiellement réalisée en matière plastique surmoulée sur ladite ossature, et le support déformable est venu de matière plastique avec la partie de traverse surmoulée sur l'ossature métallique ;
- le support déformable est réalisé en métal ;
- l'élément d'absorption a une raideur en écrasement supérieure à celle du bloc élastomère ;
- l'élément d'absorption est réalisé en métal, notamment en acier ;
- l'élément d'absorption a une forme de soufflet ayant, selon la direction d'écrasement une succession de sections tronconiques alternées, de sorte que la déformation en écrasement de l'élément d'absorption est réalisé par pliage au niveau de plis circulaires coaxiaux ;
- le support déformable comprend une base sensiblement plane solidaire de la traverse, et un bras galbé en saillie de ladite base ayant une échancrure du côté de son extrémité libre, au niveau de laquelle est supporté le bloc élastomère ; et
- la base est formée avec une glissière dans laquelle est engagée l'extrémité inférieure de l'élément d'absorption, selon une direction orthogonale à la direction d'écrasement, l'extrémité supérieure de l'élément d'absorption étant engagée dans l'échancrure.

Un mode de réalisation de l'invention va maintenant être décrit plus en détail en référence aux dessins annexés, sur lesquels :
- la Figure 1 est une vue schématique partielle, en perspective, d'une face avant conforme à l'invention ; et
- la Figure 2 est une vue de détail en perspective, à plus grande échelle, représentant une butée de capot de la face avant de la Figure 1.

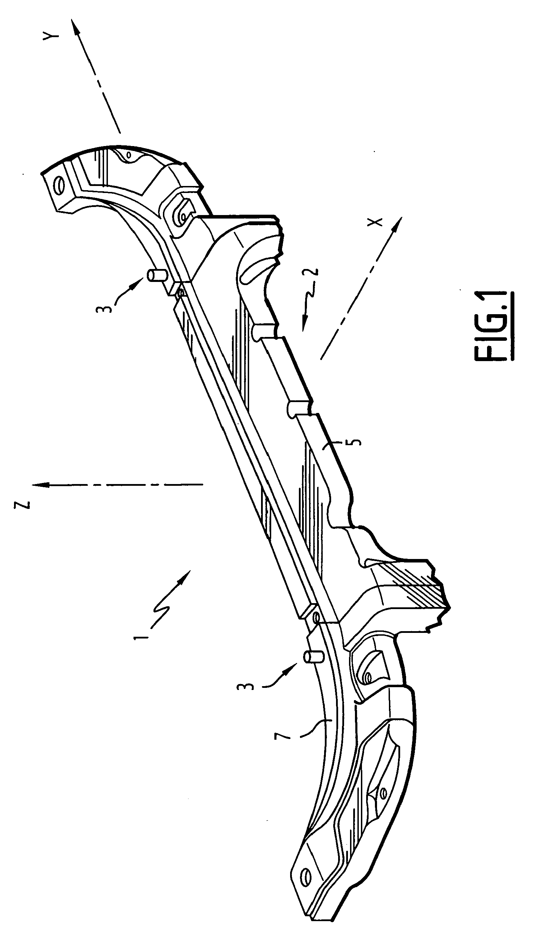

Sur la Figure 1, on a représenté partiellement une face avant 1 de véhicule automobile conforme à l'invention, orientée suivant le système d'axes usuel X, Y, Z, dans lequel :
- l'axe X est l'axe longitudinal du véhicule, orienté d'arrière en avant ;
- l'axe Y est l'axe transversal orienté de la droite vers la gauche, en considérant le sens de marche du véhicule ; et
- l'axe Z est l'axe vertical orienté du bas vers le haut.

Dans toute la description qui va suivre, les termes d'orientation et de position s'entendront par rapport à ce système d'axes.

Cette face avant 1 comprend une traverse structurelle 2, qui s'étend principalement selon la direction transversale Y, et deux butées de capot, schématisées sous la référence 3, agencées symétriquement par rapport au plan médian XZ sur la traverse 2.

Dans l'exemple représenté, la traverse 2 et de type hybride, à savoir qu'elle comprend une ossature métallique 5, et des parties 7 en matière plastique, surmoulées sur l'ossature métallique 5.

Les butées 3 sont prévues pour recevoir en appui le capot avant (non représenté) du véhicule, lorsque le capot est en position fermée.

Les butées 3 sont en outre prévues pour se déformer en écrasement lors d'un choc sur le capot, correspondant à un impact de piéton, en absorbant au moins partiellement l'énergie du choc.

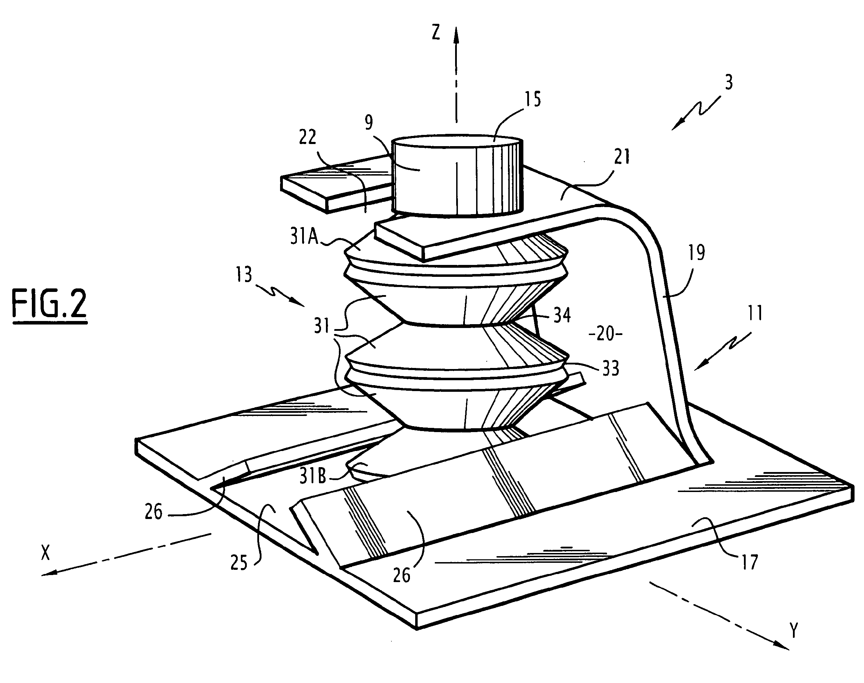

Comme cela est visible sur la Figure 2, chaque butée 3 comprend un bloc élastomère 9 d'appui pour le capot, un support déformable 11 supportant le bloc élastomère 9, et un élément déformable 13 d'absorption de choc.

Le bloc élastomère 9 est par exemple un bloc de forme générale cylindrique, en caoutchouc, reposant par sa base inférieure sur le support 11, et dont la base supérieure 15 est prévue pour former une surface d'appui pour le capot.

Le support 11 est, dans l'exemple représenté, formé d'une seule pièce venue de matière avec la partie plastique surmoulée 7 de la traverse 2.

Le support 11 comprend essentiellement une base 17 généralement plane définissant une surface plane d'appui pour l'élément d'absorption 13, et un bras galbé 19 formé en saillie de la base 17.

Le bras 19 comprend un montant 20 essentiellement orthogonal à la base 17 (essentiellement vertical), et un plateau 21 essentiellement parallèle à la base 17 (essentiellement horizontal).

Le bras 19 possède dans sa partie supérieure une extrémité libre définie par le plateau 21. Le plateau 21 est formé avec une échancrure 22 allongée selon l'axe X, et ouverte à l'extrémité libre du bras 19, vers l'avant.

Le plateau 21 définit une surface d'appui pour le bloc élastomère 9, lequel porte sur les bords de l'échancrure 22.

De préférence, le bras 19 est prévu frangible sous l'effet d'un effort axial vertical (en Z) sur le plateau 21 dépassant un seuil d'intensité prédéterminé compris entre une intensité correspondant à une fermeture de capot et une intensité correspondant à un choc piéton.

La base 17 est formée avec une glissière 25 qui s'étend parallèlement à l'échancrure 22, selon la direction X. La glissière 25 est définie par deux parois 26 opposées, symétriques par rapport au plan XZ, qui s'étendent selon l'axe X, et qui sont inclinées l'une vers l'autre par rapport à la base 17.

L'élément d'absorption 13 est constitué d'une pièce métallique, notamment en acier, ayant une forme générale de soufflet. Il présente une succession de sections tronconiques 31 d'axe Z, dont une section d'extrémité supérieure 31A et une section d'extrémité inférieure 31B. Ces sections tronconiques 31 sont identiques et alternées, deux sections consécutives ayant leurs bases de plus grande dimension l'une tournée vers le bas, l'autre tournée vers le haut.

Deux sections tronconiques 31 consécutives sont reliées par des parties annulaires de liaison 33, 34, les unes 33 de plus grand diamètre, et les autres 34 de plus petit diamètre.

La section tronconique supérieure 31A est solidaire du bloc élastomère 9, par sa base de plus petit diamètre, laquelle est engagée au travers de l'échancrure 22.

La section tronconique inférieure 31B de l'élément d'absorption 13 est engagée dans la glissière 25, en étant maintenue à l'intérieur de celle-ci par coopération de forme de la surface tronconique avec les parois inclinées 26.

Les parties de liaison 33, 34 entre les sections tronconiques 31 constituent des plis circulaires coaxiaux permettant la déformation en écrasement de l'élément d'absorption 13, selon l'axe Z.

L'élément d'absorption 13 a une raideur en écrasement supérieure à celle du bloc élastomère 9, et très supérieure à la rigidité en flexion du bras 19.

Le montage sur la traverse 2 du sous-ensemble constitué de l'élément d'absorption 13, et du bloc élastomère 9 solidaire de ce dernier, est effectué de façon extrêmement simple, en engageant, depuis l'avant selon la direction X, la section inférieure 31B de l'élément d'absorption dans la glissière 25, et simultanément, la section supérieure 31A dans l'échancrure 22 en faisant glisser le bloc élastomère 9 sur le plateau 21.

L'élément d'absorption 13 et le bloc élastomère 9 peuvent être maintenus en position de fonctionnement, en fond d'échancrure 22, par tout moyen additionnel de blocage adapté (non représenté).

La butée de capot 3 précédemment décrite fonctionne de la façon suivante.

En fonctionnement normal, lors de la fermeture du capot, le choc de claquage du capot est absorbé par le bloc élastomère 9, lequel se déforme en compression en étant maintenu en appui sur le plateau 21 du support. Dans ces conditions de fonctionnement, le support 11 et l'élément d'absorption 13 ne subissent pas de déformation sensible.

En cas de choc piéton, le capot subissant un choc d'intensité importante supposé essentiellement dirigé verticalement vers le bas, le bloc élastomère 9 parvient dans un état de déformation en compression maximale. Le bras 19 du support fléchit, éventuellement jusqu'à rupture, sans absorption significative de l'énergie de choc. L'énergie d'un tel choc est absorbée essentiellement par la déformation en compression de l'élément d'absorption 13. Cette déformation en compression se traduit par l'écrasement des sections tronconiques 31 les unes sur les autres, avec un pliage au niveau des parties de liaison circulaires 33, 34.

Dans une variante de réalisation, le support déformable 11 est réalisé en métal, d'un seul tenant avec la traverse structurelle 2. Dans un tel cas, l'épaisseur du bras 19 est choisie relativement faible de façon à offrir une faible rigidité en flexion, qui n'interfère pas avec l'élément d'absorption 13 dans sa fonction d'absorption du choc piéton.

On comprend à la lecture de la description qui vient d'être faite, que les butées de capot utilisées dans l'invention peuvent convenir à des faces avant existantes, non prévues pour intégrer la fonction d'absorption de choc piéton, moyennant des modifications légères, par exemple de la partie surmoulée sur l'ossature dans le cas de faces avant hybrides.

## Revendications

1. Face avant de véhicule automobile comportant une traverse structurelle (2), et au moins une butée de capot (3), agencée sur la traverse (2) et prévue pour absorber des chocs correspondant à un impact de piéton sur le capot, ladite butée (3) comprenant :
- un bloc élastomère (9) d'appui du capot,
- un support déformable (11) pour le bloc élastomère, solidaire de la traverse (2), et
- un élément déformable (13) d'absorption de choc, solidaire du bloc élastomère (9) et reliant ce dernier à la traverse (2),
**caractérisée en ce que** ledit support déformable (11) est venu de matière avec la traverse (2), et l'élément d'absorption (13) est rapporté et fixé sur la traverse.

2. Face avant suivant la revendication 1,
**caractérisée en ce qu'**elle est de type hybride, la traverse ayant une ossature métallique (5) et étant partiellement réalisée en matière plastique (7) surmoulée sur ladite ossature, et **en ce que** le support déformable (11) est venu de matière plastique avec la partie de traverse (7) surmoulée sur l'ossature métallique (5).

3. Face avant suivant la revendication 1,
**caractérisée en ce que** le support déformable (11) est réalisé en métal.

4. Face avant suivant l'une quelconque des revendications 1 à 3, **caractérisée en ce que** l'élément d'absorption (13) a une raideur en écrasement supérieure à celle du bloc élastomère (9).

5. Face avant suivant l'une quelconque des revendications 1 à 4, **caractérisée en ce que** l'élément d'absorption (13) est réalisé en métal, notamment en acier.

6. Face avant suivant l'une quelconque des revendications 1 à 5, **caractérisée en ce que** l'élément d'absorption (13) a une forme de soufflet ayant, selon la direction d'écrasement (Z) une succession de sections tronconiques (31) alternées, de sorte que la déformation en écrasement de l'élément d'absorption (13) est réalisé par pliage au niveau de plis circulaires coaxiaux (33, 34).

7. Face avant suivant l'une quelconque des revendications 1 à 6, **caractérisée en ce que** le support déformable (11) comprend une base (17) sensiblement plane solidaire de la traverse (2), et un bras galbé (19) en saillie de ladite base ayant une échancrure (22) du côté de son extrémité libre, au niveau de laquelle est supporté le bloc élastomère (9).

8. Face avant suivant la revendication 7,
**caractérisé en ce que** la base (17) est formée avec une glissière (25) dans laquelle est engagée l'extrémité inférieure (31B) de l'élément d'absorption (13), selon une direction (X) orthogonale à la direction d'écrasement (Z), l'extrémité supérieure (31A) de l'élément d'absorption (13) étant engagée dans l'échancrure (22).
